# EUROPEAN PATENT SPECIFICATION

(11) **EP 0 977 349 B1**
(45) Date of publication and mention of the grant of the patent: **06.07.2005**
(21) Application number: 98830464.8
(22) Date of filing: 30.07.1998
(51) Int. Cl.: H02N 1/00, G11B 21/02

(54) **Remote-operated integrated microactuator, in particular for a read/write transducer of hard discs**
Fernbedienbarer integrierter Microantrieb, insbesondere für einen Lese/Schreibköpf einer Festplattenanlage
Microactionneur intégré actionné à distance, en particulier pour un transducteur de lecture/écriture dans un dispositif à disque dur

(43) Date of publication of application: 02.02.2000
(73) Proprietor: STMicroelectronics S.r.l., 20041 Agrate Brianza (Milano) (IT)
(72) Inventor: Vigna, Benedetto, 85100 Potenza (IT); Zerbini, Sarah, 43012 Fontanellato (IT); Sassolini, Simone, 52037 Sansepolcro (IT); Menescardi, Carlo, 20010 Vittuone (IT)
(74) Representative: Cerbaro, Elena, Dr.

(56) References cited:
- EP-A- 0 533 095
- US-A- 5 631 514
- YOGESH GIANCHANDANI ET AL: "BATCH FABRICATION AND ASSEMBLY OF MICROMOTOR-DRIVEN MECHANISMS WITH MULTI-LEVEL LINKAGES" PROCEEDINGS OF THE WORKSHOP ON MICRO ELECTRO MECHANICAL SYSTEMS, TRAVEMUNDE, FEB. 4 - 7, 1992, no. WORKSHOP 5, 4 February 1992, pages 141-146, XP000344141 BENECKE W;PETZOLD H -C
- LEE A P ET AL: "POLYSILICON MICRO VIBROMOTORS" PROCEEDINGS OF THE WORKSHOP ON MICRO ELECTRO MECHANICAL SYSTEMS, TRAVEMUNDE, FEB. 4 - 7, 1992, no. WORKSHOP 5, 4 February 1992, pages 177-182, XP000344149 BENECKE W;PETZOLD H -C
- PATENT ABSTRACTS OF JAPAN vol. 095, no. 010, 30 November 1995 -& JP 07 177773 A (ZEXEL CORP), 14 July 1995

## Description

The present invention relates to a remote-operated integrated microactuator. In particular, the integrated microactuator according to the present invention may be advantageously but not exclusively used to actuate read/write transducers of hard discs, to which the discussion below will make explicit reference without thereby losing generality.

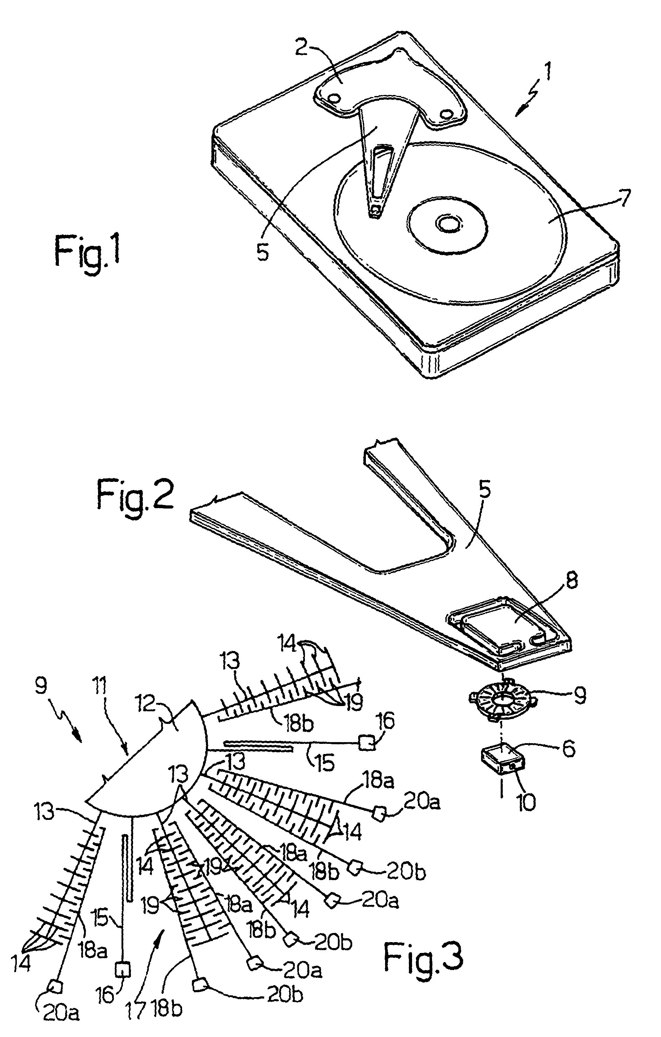

As is known, hard disc actuating devices that have a dual actuation stage have recently been proposed for fine control of the position of the read/write head with respect to a hard disc to be read or written. Figs. 1 and 2 schematically show an example of a known hard disc actuating device with dual actuation stage. In detail, in Fig. 1 the hard disc actuation device 1 comprises a motor 2 (also called "voice coil motor") to which at least one suspension 5 formed by a lamina is fixed in projecting manner. At its free end the suspension 5 has an R/W (read/write) transducer 6 (Fig. 2), also called slider and disposed (in operative condition) facing a surface of a hard disc 7 (Fig. 1). The R/W transducer 6 is rigidly connected to a coupling, called gimbal 8, via a microactuator 9 interposed between the gimbal 8 and the R/W transducer 6 (Fig. 2). On one of its lateral surfaces the R/W transducer 6, formed by a ceramic material body (e.g. AlTiC), further has a read/write head 10 (magneto/resistive and inductive) which forms the proper read/write device.

In the actuating device 1, the first actuation stage is formed by motor 2 that moves the unit formed by the suspension 5 and the R/W transducer 6 across the hard disc 7 during track seeking and the second actuation stage is formed by microactuator 9 that finely controls the position of the R/W transducer 6 during tracking.

An embodiment of a microactuator 9 of rotary electrostatic type is shown in diagrammatic form in Fig. 3 in which the microactuator 9 is shown only in part, given its axial symmetry. The microactuator 9 comprises a stator 17, integral with the die accommodating the microactuator 9 and bonded to the gimbal 8, and a rotor 11, intended to be bonded to the R/W transducer 6 (Fig. 2) and capacitively coupled to the stator 17.

Rotor 11 comprises a suspended mass 12 of substantially circular shape and a plurality of movable arms 13 extending radially towards the outside from the suspended mass 12. Each movable arm 13 has a plurality of movable electrodes 14 extending in substantially circumferential direction and at a same distance from each other. The rotor 11 further comprises anchoring and elastic suspension elements (springs 15) for supporting and biasing of the rotor 11 through fixed regions 16.

Stator 17 comprises a plurality of fixed arms 18a, 18b extending radially and each bearing a plurality of fixed electrodes 19; in particular, associated with each movable arm 13 is a pair of fixed arms formed by a fixed arm 18a and a fixed arm 18b; the fixed electrodes 19 of each pair of fixed arms 18a, 18b extend towards the associated movable arm 13 and are intercalated or interleaved with the movable electrodes 14. The fixed arms 18a are all disposed on a same side of the respective movable arms 13 (on the right in the example shown) and are all polarized at the same potential via biasing regions 20a; similarly the fixed arms 18b are all disposed on the other side of the respective movable arms 13 (on the left in the example shown) and are all biased at the same potential through biasing regions 20b.

Fixed arms 18a and 18b are biased at different potentials to generate two different potential differences with respect to the movable arms 13 and cause the rotor to rotate in one direction or the other.

The known arrangement shown in Fig. 2 does, however, have several disadvantages.

Microactuator 9 is subject to intense mechanical stresses due to the impacts of the R/W transducer 6 against the hard disc 7 that may damage the microactuator 9.

Furthermore, the microactuator 9 is exposed to the external environment and therefore is not protected from extraneous particles present in the environment that may compromise its satisfactory operation.

Finally, the biasing voltages to be supplied to the microactuator 9 to obtain the desired movements of the R/W transducer 6 have relatively high values, of the order of 80 V, which may cause electrostatic interference in the direction of the R/W transducer 6.

EP-A-0 533 095 discloses a storage device including a substrate, a magnetic storage medium provided on the substrate to magnetically store information, a head unit, and a reciprocating mechanism provided on the substrate to cause the head unit to reciprocate in a plane parallel to a surface of the magnetic storage medium, wherein, while the head unit is being moved by the reciprocating mechanism, information is recorded in or reproduced from the magnetic storage medium via the head unit. In particular, the reciprocating mechanism comprises two electrostatic actuators, and a head supporting member arranged between the electrostatic actuators and the head unit, and having a head supporting arm at a tip end thereof the head unit is mounted, and a supporting frame connecting the head supporting arm to the electrostatic actuators and configured so as to make the head unit to slide on the magnetic storage medium.

The object of the present invention is to provide a read/write system for a hard disc which overcomes the above-mentioned disadvantages.

The invention provides a read/write system for a hard disc, as defined in Claim 1.

For the understanding of the present invention a number of preferred embodiments will now be described, purely by way of non-exhaustive example, with reference to the accompanying drawings, in which:
- Fig. 1 is a perspective view of an actuating device for hard discs of known type;
- Fig. 2 is an exploded view of a micrometric actuation assembly of the actuating device of Fig. 1;
- Fig. 3 is a schematic view of an integrated microactuator of known type;
- Fig. 4 is a schematic view of an integrated microactuator according to a first embodiment of the present invention;
- Fig. 5 is a schematic view of an integrated microactuator according to a second embodiment of the present invention;
- Fig. 6 is a schematic view of an integrated microactuator according to a third embodiment of the present invention;
- Fig. 7 is a schematic view of an integrated microactuator according to a fourth embodiment of the present invention; and
- Fig. 8 is a schematic view of an integrated microactuator according to a fifth embodiment of the present invention.

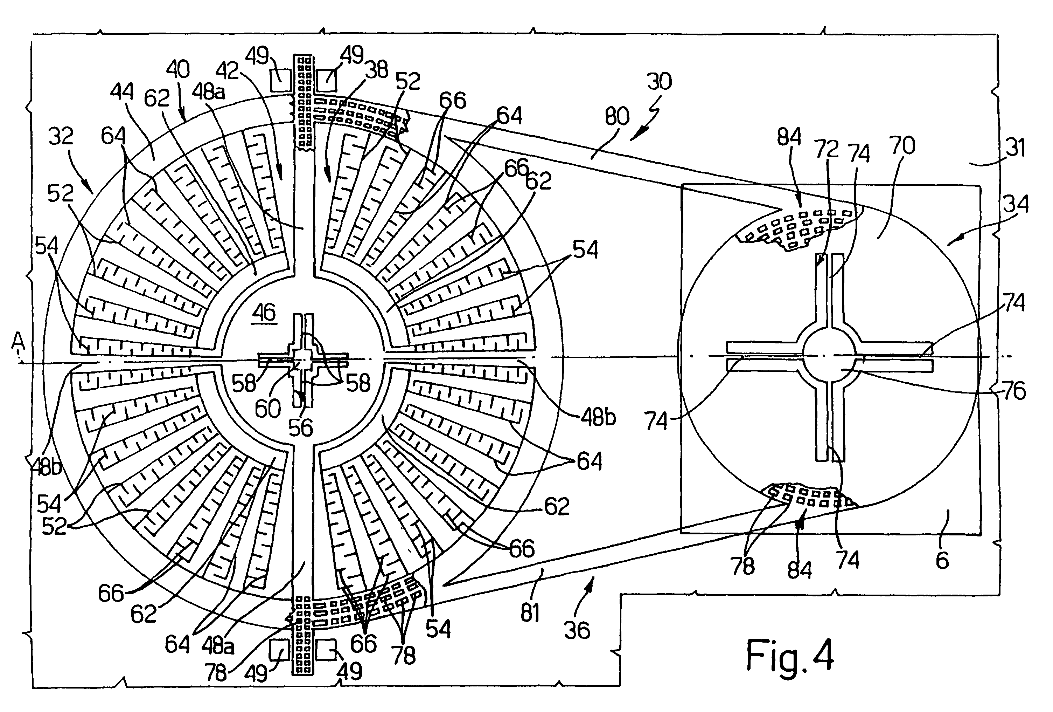

In Fig. 4, a microactuator is indicated as a whole at 30 and is integrated in a die 31 intended to be rigidly connected to the gimbal 8 (Fig. 2). Microactuator 30 comprises a motor element 32 of rotary type; an actuator element 34 separated from the motor element 32 and to which the R/W transducer 6 (Fig. 2) is to be rigidly fixed; and a transmission structure 36 interposed between motor element 32 and actuator element 34 to transmit a rotary movement of motor element 32 to actuator element 34 and then to the R/W transducer fixed thereto. Microactuator 30 is symmetrical with respect to an axis A passing through the centres of the motor element 32 and the actuator element 34.

In particular, motor element 32 comprises an internal stator 38 integral with the die 31 and an external rotor 40 capacitively coupled to the stator 38 and connected to the actuator element 34 by the transmission structure 36.

The rotor 40 comprises a suspended mass 42 comprising an external annular region 44, externally delimiting the motor element 32, an internal circular region 46, arranged coaxially inside the external annular region 44 and two pairs of radial arms 48a, 48b for connecting the external annular region 44 and the internal circular region 46; radial arms 48a, 48b are suspended and at a same angular distance from each other.

In particular, the two radial arms 48a, which are reciprocally aligned, project beyond the external annular region 44 between stop regions 49, and have the function of preventing excessive rotations of the rotor 40 which could cause a short-circuit between rotor 40 and stator.

Rotor 40 further comprises a plurality of movable arms 52 extending radially from the external annular region 44 towards and as far as near the internal circular region 46 of the suspended mass 42. Each movable arm 52 has a plurality of extended projections defining movable electrodes 54 that are all arranged on the same side of the respective movable arm 52, are at a same distance from each other along the movable arm 52 and extend in a substantially circumferential direction.

Internal circular region 46 further has a through-opening 56 substantially of cross shape, coaxial to the internal circular region 46; four anchoring and elastic suspension elements 58 are arranged inside internal circular region 46 and elastically connect internal circular region 46 to a fixed anchoring region 60 arranged in the centre of the opening 56.

Stator 38 comprises four sector regions 62 ring-shaped, arranged between internal circular region 46 of suspended mass 42 and the free ends of the movable arms 52 and each extending between a respective pair of adjacent radial arms 48a, 48b.

Stator 38 further comprises a plurality of fixed arms 64 extending radially from sector regions 62 towards external annular region 44 of suspended mass 42 and each disposed facing a respective movable arm 52.

Each fixed arm 64 has a plurality of extended projections defining fixed electrodes 66 all extending towards the respective movable arm 52 in a substantially circumferential direction and intercalated or interleaved with the movable electrodes 54 of the respective movable arm 52.

Actuator element 34 comprises a suspended mass 70 of substantially circular shape with a central opening 72 substantially of cross shape, coaxial with the suspended mass 70; four anchoring and elastic suspension elements 74 are arranged in central opening 72 and elastically connect the suspended mass 70 to a fixed anchoring region 76 arranged centrally to central opening 72.

External annular region 44, internal circular region 46, radial arms 48a, 48b of rotor 40, part of the fixed arms 64 and of the movable arms 52 as well as suspended mass 70 of actuator element 34 have a plurality of through-holes 78, only some of which are shown in the drawing for sake of illustration, the purpose of which is to allow the removal of a sacrificial layer (not shown) during fabrication of microactuator 30.

In Fig. 4, transmission structure 36 comprises a first and a second transmission arm 80, 81 identical to each other, extending between motor element 32 and actuator element 34 and disposed symmetrically on opposite sides of axis A. First and second transmission arm 80, 81 connect the external annular region 44 of rotor 40, approximately from the two arms 48a, to two diametrically opposed regions 84 of the suspended mass 70.

Preferably the microactuator has the following dimensions: the motor element 32 has a diameter comprised between 1.6 and 1.8 mm, the actuator element 34 has a diameter comprised between 0.7 and 0.9 mm, the distance between the motor element 32 and the actuator element 34 is comprised between 0.2 and 0.4 mm, and the width of the transmission arms 80, 81 is comprised between 50 and 100 µm.

The first and the second transmission arm 80, 81 transmit the rotary movement of rotor 40 to actuator element 34 and then to R/W transducer 6 rigidly connected thereto. In particular, here, actuator element 34 rotates in the same direction as the rotor 40.

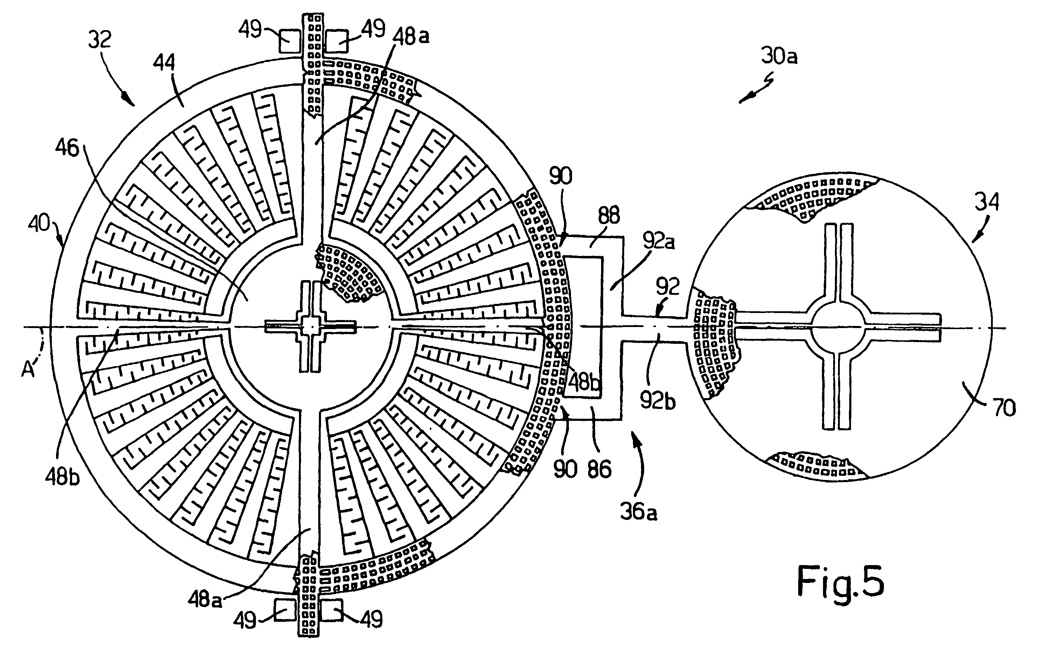

Fig. 5 shows a microactuator 30a according to a second embodiment of the present invention. Microactuator 30a comprises a motor element 32 and an actuator element 34 identical to those of microactuator 30 and therefore denoted by the same reference numerals, and a transmission structure 36a of fork shape. In detail, transmission structure 36a comprises a third and a fourth transmission arm 86, 88 which are rectilinear and parallel to each other, and a fifth, T-shaped, arm 92. The third and the fourth transmission arm 86, 88 are arranged symmetrically with respect to axis A and extend towards the actuator element 34 from adjacent sections 90 of the external annular region 44 of the rotor 40. The fifth arm 92 comprises a first portion 92a extending between the third and the fourth transmission arm 86, 88, perpendicular thereto, and a second portion 92b extending along axis A and connecting the first portion 92a to the suspended mass 70 of the actuator element 34.

With the embodiment of Fig. 5, actuator element 34 rotates in the opposite direction with respect to rotor 40.

In the microactuator 30a of Fig. 5, the fork-shape of transmission structure 36a permits the release of stresses in the microactuator 30a which are caused, for example, by the difference between the manufacturing temperature of the layer forming the microactuator 30a and the operative temperature of the microactuator.

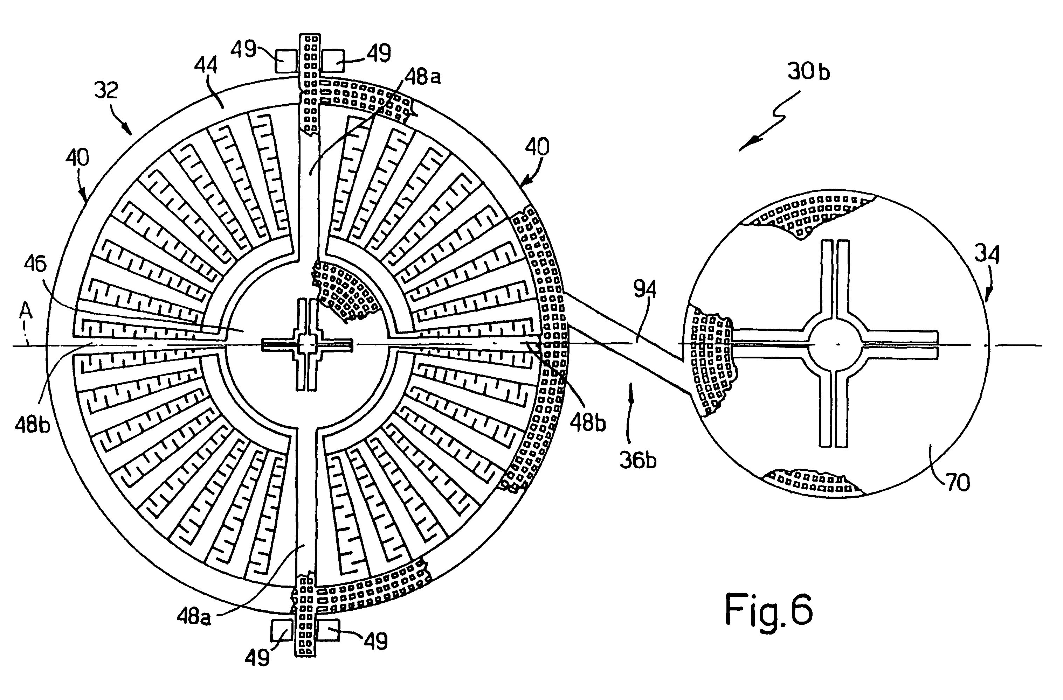

Fig. 6 shows a microactuator 30b according to a third embodiment of the present invention. Microactuator 30b comprises a motor element 32 and an actuator element 34 identical to those of microactuator 30, and a transmission structure 36b. Transmission structure 36b comprises a sixth transmission arm 94 connecting the external annular region 44 of the rotor 40 to the suspended mass 70 of the actuator element 34 and extending in an inclined direction with respect to axis A.

In microactuator 30b of Fig. 6, the inclined shape of transmission arm 94 allows an equal movement of all the points of the cross section of the transmission arm 94 during actuation (differently from the embodiments of Figs. 4 and 5 wherein the various points of the cross section of the transmission arms 80, 81 and 86, 88, 92 are subject to different stresses and are thus subject to different movement, causing a deformation of the transmission arms). In this way there is a more efficient transmission of the movement from the motor element 32 to the actuator element 34.

Also for the embodiment of Fig. 6, actuator element 34 rotates in the opposite direction with respect to rotor 40.

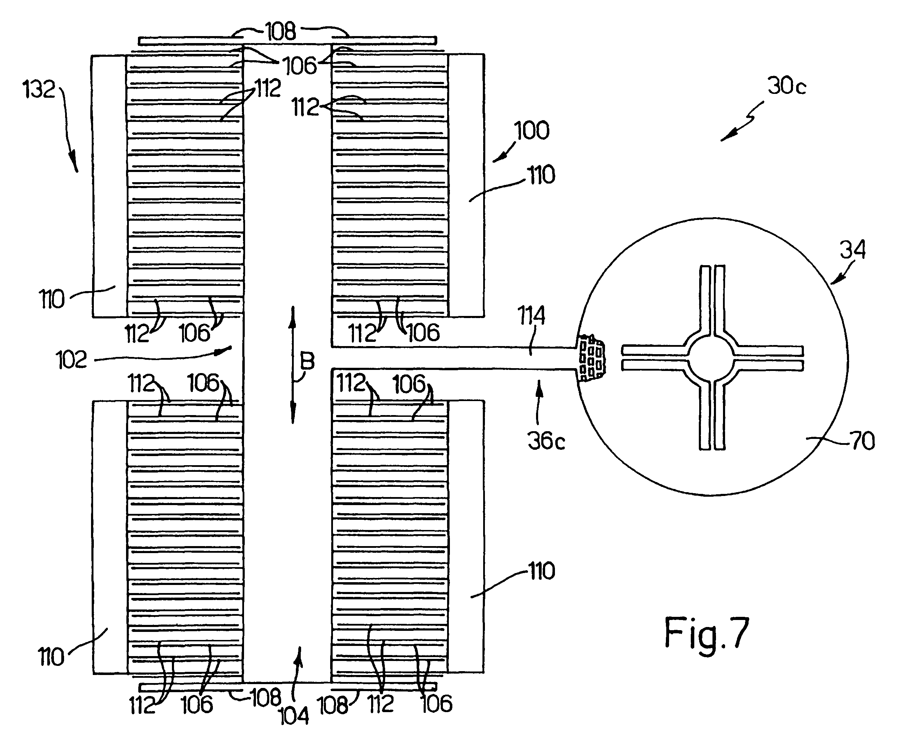

Fig. 7 shows a microactuator 30c according to a fourth embodiment of the present invention. Microactuator 30c comprises a motor element 132 of linear type, an actuator element 34 identical to the actuator elements of microactuator devices 30, 30a and 30b and therefore denoted by the same reference numeral, and a transmission structure 36c interposed between motor element 132 and actuator element 34 to transform a linear movement of motor element 132 into a corresponding rotary movement of actuator element 34.

In particular, the motor element 132 comprises a stator 100 and a rotor 102 capacitively coupled to the stator 100 and connected to the actuator element 34 by transmission structure 36c.

Rotor 102 comprises a suspended mass 104 of rectangular shape and a plurality of movable arms 106 extending from the suspended mass 104 perpendicularly to the larger sides of the suspended mass 104. In the example shown, the movable arms 106 define four groups of movable arms which are identical to each other and are disposed in pairs on respective larger sides of the suspended mass 104.

Rotor 102 further comprises anchoring and elastic suspension elements 108 extending from two opposite ends of the suspended mass 104 and having the function of supporting and biasing the rotor 102.

Stator 100 comprises four fixed regions 110 of rectangular shape, parallel to the suspended mass 104, each of which arranged facing a respective group of movable arms 106 and having a plurality of fixed arms 112. Fixed arms 112 extend perpendicularly to the larger sides of the respective fixed region 110 and are each disposed facing a respective movable arm 106.

Transmission structure 36c comprises a seventh transmission arm 114 extending between two groups of movable arms 106, centrally and perpendicularly with respect to the suspended mass 104.

When suitable potential differences are applied between the rotor 102 and the stator 100, rotor 102 performs an alternating linear movement in the direction of arrow B. The seventh transmission arm 114, integral with both the actuator element 132 and the actuator element 34, which may only perform a rotary movement, thus transforms the alternating linear movement of actuator element 34 into an alternating rotary movement of actuator element 34 by virtue of its elasticity allowing the necessary small deformations of the transmission arm 114. Consequently, the R/W transducer 6, rigidly fixed to the actuator element 34, performs a rotary movement as in the preceding embodiments.

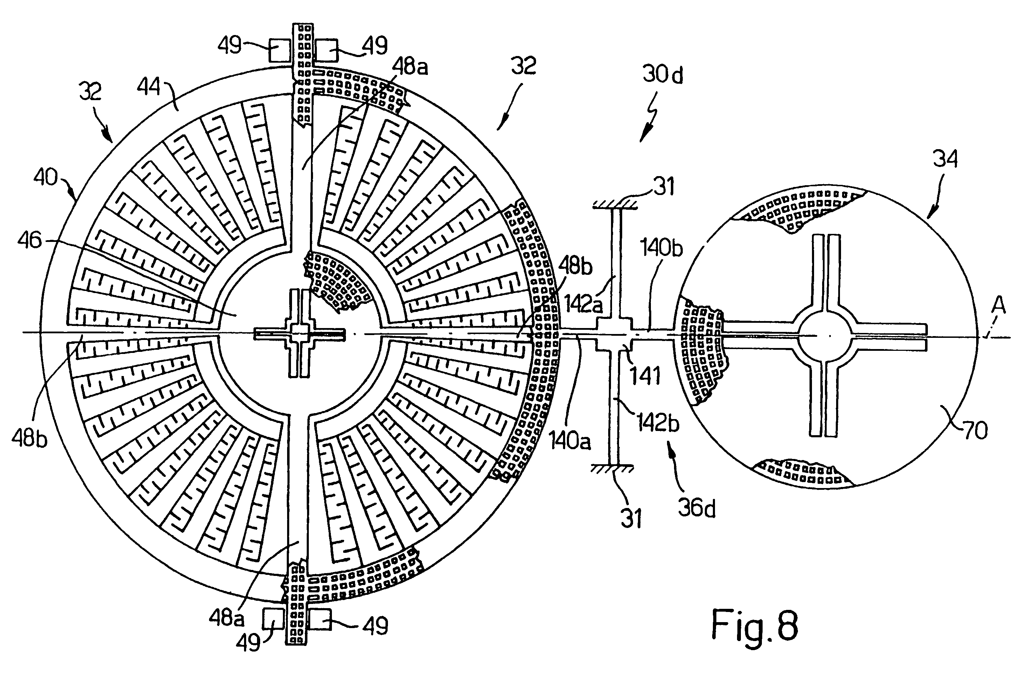

Fig. 8 shows a microactuator 30d according to a fifth embodiment of the present invention. Microactuator 30d is of rotary type and comprises a motor element 32 and an actuator element 34 identical to those of the microactuator 30, and a transmission structure 36d. Transmission structure 36d comprises an eighth and a ninth transmission arm 140a, 140b extending in mutually aligned manner along axis A and connected by a hinge portion 141 connected to the die 31 via two sections 142a, 142b perpendicular to the arms 140a, 140b.

Transmission arms 140a, 140b and sections 142a, 142b are thinner than arms 80, 81, 86, 88, 92, 94 and 114; for example the width of the transmission arms 140a, 140b is comprised between 5 and 15 µm, preferably equal to 10 µm, and the length of each section 142a, 142b may be equal to two to four times that of each arm 140a, 140b (therefore comprised between 0.2 and 0.8 mm). In the embodiment of Fig. 8 actuator element 34 rotates in the same direction as rotor 40.

In the microactuator 30d of Fig. 8, the particularly reduced width of the transmission arms 140a, 140b ensures that they undergo substantially uniform stresses along cross sections and so all the points belonging to a same cross section undergo equal movements; in this way the deformation energy associated with the operation of the microactuator 30d is reduced and there is better transmission efficiency. Furthermore, the presence of anchorages at the ends of the sections 142a, 142b allows a better support of all the suspended structures (rotor 40, actuation element 34 and transmission structure 36d) otherwise supported solely at the fixed anchorage regions 60 and 70.

The advantages afforded by the described actuating device are the following. First, the physical separation between motor element 32, 132 and R/W transducer 6 causes a considerable reduction of the mechanical stresses applied to motor element 32, 132 during the impacts of the R/W transducer 6 on the hard disc 7, thereby increasing its general insensitivity to mechanical stresses. Furthermore, the electrostatic interference caused by the high biasing voltages of the motor element 32, 132 on the R/W transducer 6 is also considerably reduced.

The physical separation between motor element 32, 132 and R/W transducer 6 permits sealing of the motor element 32, 132 to protect it both from contaminating particles present in the atmosphere or generated during the operation of the microactuator and from particles generated during cutting of the semiconductor wafer accommodating the microactuator.

Furthermore, the present invention enables movement generation to be separated from actuation of the R/W transducer 6, thereby enabling these phases and the relative structures to be optimized independently of each other.

Finally it will be clear that modifications and variants may be introduced to the microactuators 30, 30a, 30b and 30c described and illustrated without thereby departing from the scope of the present invention, as defined in the appended claims.

## Claims

1. A read/write system for a hard disk (7), the system comprising a suspension device (5) positionable over a region of said hard disk (7); a read/write transducer (6) operatively coupled to said suspension device (5); a first actuation stage (2) coupled to said suspension device (5) and operable to move said suspension device (5) over said region of said hard disk (7); and a second actuation stage (30; 30a; 30b; 30c, 30d) coupled between said suspension device (5) and said read/write transducer (6) and operable to move said read/write transducer (6) with respect to said suspension device (5); wherein said second actuation stage comprises a microactuator (30; 30a; 30b; 30c, 30d) comprising a motor element (32; 132) having a stationary element (38; 100) capacitively coupled to a movable element (40; 102); **characterized in that** said microactuator (30; 30a; 30b; 30c, 30d) further comprises a separate actuator element (34) spaced laterally from said motor element (32; 132) and coupled to said read/write transducer (6); and a transmission structure (36; 36a; 36b; 36c, 36d) extending outwardly from said motor element (32; 132) to said actuator element (34) to transmit a movement of said movable element (40; 102) into a corresponding movement of said actuator element (34).

2. A system according to Claim 1, **characterized in that** said actuator element (34) is arranged adjacently to said motor element (32; 132) and **in that** said transmission structure (36; 36a; 36b; 36c; 36d) comprises at least one connection element (80, 81; 86, 88, 92; 94; 114; 140a, 140b) extending between said motor element (32; 132) and said actuator element (34).

3. A system (30) according to Claim 1 or 2, **characterized in that** said motor element (32) and said actuator element (34) have a circular structure and **in that** said transmission structure (36) comprises a first and a second transmission arm (80, 81) extending between said motor element (32) and said actuator element (34) and arranged on opposite sides with respect to a symmetry axis (A) of said microactuator (30).

4. A system according to Claim 3, **characterized in that** said first and a second transmission arm (80, 81) are arranged symmetrically on opposite sides with respect to said axis (A).

5. A system according to Claim 3 or 4, **characterized in that** said first and a second transmission arm (80, 81) connect approximately diametrically opposed portions of a peripheral region (44) of said movable element (40) to substantially diametrically opposed regions (84) of said actuator element (34).

6. A system (30a) according to Claim 1 or 2, **characterized in that** said motor element (32) and said actuator element (34) have a circular structure and **in that** said transmission structure (36a) comprises a third and a fourth transmission arm (86, 88) extending towards said actuator element (34) from said motor element (32) and arranged on opposite sides with respect to a symmetry axis (A) of said microactuator (30a); said transmission structure (36a) further comprising a fifth arm (92) having a T-shape and interposed between said third and fourth arm and said actuator element (34).

7. A system according to Claim 6, **characterized in that** said third and fourth transmission arm (86, 88) are arranged symmetrically on opposite sides with respect to said symmetry axis (A), are parallel to each other and extend from adjacent sections of a peripheral region (44) of said movable element (40).

8. A system according to Claim 6 or 7, **characterized in that** said fifth arm (92) comprises a first portion (92a) extending at right angles between said third and fourth transmission arm (86, 88) and a second portion (92b) parallel to said third and fourth transmission arm (86, 88), coaxial to said symmetry axis (A) and connecting said first portion (92a) to a peripheral zone of said actuator element (34).

9. A system (30b) according to Claim 1 or 2, **characterized in that** said motor element (32) and said actuator element (34) have a circular structure and **in that** said transmission structure (36b) comprises a sixth transmission arm (94) extending between said motor element (40) and said actuator element (34) in an inclined direction with respect to a symmetry axis (A) of said microactuator (32c).

10. A system (30c) according to Claim 1 or 2, **characterized in that** said actuator element (34) has a circular structure and said motor element is of linear type and said movable element (100) comprises a suspended mass (104) of substantially elongated shape; and **in that** said transmission structure (36c) comprises a seventh transmission arm (114) extending between said suspended mass (104) and said actuator element (34) in a direction transverse to said suspended mass (104).

11. A system according to Claim 10, **characterized in that** said seventh arm extends between a central zone of said suspended mass (104) and a peripheral zone of said actuator element (34) in a perpendicular direction to said suspended mass (104).

12. A system (30d) according to Claim 1 or 2, **characterized in that** said motor element (32) and said actuator element (34) have a circular structure and **in that** said transmission structure (36d) comprises an eighth (140a) and a ninth transmission arm (140b) extending in mutually aligned manner along a symmetry axis (A) and joined by a hinge portion (141) connected to a fixed region (31) of said microactuator (30d) through two sections (142a, 142b) substantially perpendicular to said eighth and ninth arm (140a, 140b).

## Patentansprüche

1. Lese/Schreib-System fur eine Festplatte (7), wobei das System eine Aufhangevorrichtung (5) aufweist, welche uber einen Bereich der Festplatte (7) positionierbar ist; einen Lese/Schreib-Wandler bzw. -Kopf (6), welcher operativ mit der Aufhangevorrichtung (5) verbunden ist; eine erste Stell- bzw. Steuerungsstufe (2), welche mit der Aufhängevorrichtung (5) verbunden ist und welche betriebsfahig ist, um die Aufhängevorrichtung (5) über den Bereich der Festplatte (7) zu bewegen; und eine zweite Stell- bzw. Steuerungsstufe (30; 30a; 30b; 30c; 30d), welche zwischen die Aufhängevorrichtung (5) und dem Lese/Schreib-Kopf (6) gekuppelt ist und welche betriebsfahig ist, um den Lese/Schreib-Kopf (6) gegenüber der Aufhangevorrichtung (5) zu bewegen; wobei die zweite Betätigungsstufe einen Mikroaktuator (30; 30a; 30b; 30c; 30d) aufweist, welcher ein Motorelement (32; 132) aufweist, welches ein stationares Element (38; 100) besitzt, welches kapazitiv an ein bewegliches Element (40; 102) angeschlossen ist; **gekennzeichnet dadurch, dass** der Mikroaktuator (30; 30a; 30b; 30c; 30d) ferner ein getrenntes Aktuatorelement (34) aufweist, welches lateral zum Motorelement (32; 132) beabstandet ist und mit dem Lese/Schreib-Kopf (6) verbunden ist; und eine Übertragungs- bzw. Ubersetzungsstruktur (36; 36a; 36b; 36c; 36d), welche sich von dem Motorelement (32; 132) zu dem Aktuatorelement (34) nach außen erstreckt, um eine Bewegung des beweglichen Elementes (40; 102) in eine entsprechende Bewegung des Aktuatorelements (34) zu ubertragen.

2. System nach Anspruch 1, **dadurch gekennzeichnet, dass** das Aktuatorelement (34) benachbart zu dem Motorelement (32; 132) angeordnet ist, und dass die Ubertragungsstruktur (36; 36a; 36b; 36c; 36d) wenigstens ein Verbindungselement (80, 81; 86, 88, 92; 94; 114; 140a, 140b) aufweist, welches sich zwischen dem Motorelement (32; 132) und dem Aktuatorelement (34) erstreckt.

3. System (30) nach Anspruch 1 oder 2, **dadurch gekennzeichnet, dass** das Motorelement (32) und das Aktuatorelement (34) eine kreisförmige Struktur besitzen, und dass die Übertragungsstruktur (36) einen ersten und einen zweiten Übertragungsarm (80, 81) aufweist, welche sich zwischen dem Motorelement (32) und dem Aktuatorelement (34) erstrecken und auf gegenüberliegenden Seiten bezüglich einer Symmetrieachse (A) des Mikroaktuators (30) angeordnet sind.

4. System nach Anspruch 3, **dadurch gekennzeichnet, dass** der erste und ein zweiter Ubertragungsarm (80, 81) symmetrisch auf gegenuberliegenden Seiten bezüglich der Achse (A) angeordnet sind.

5. System nach Anspruch 3 oder 4, **dadurch gekennzeichnet, dass** der erste und ein zweiter Ubertragungsarm (80, 81) nahezu diametral gegenüberliegende Teile eines peripheren Bereiches (44) des beweglichen Elements (40) mit im Wesentlichen diametral gegenüberliegenden Bereichen (84) des Aktuatorelements (34) verbinden.

6. System (30a) nach Anspruch 1 oder 2, **dadurch gekennzeichnet, dass** das Motorelement (32) und das Aktuatorelement (34) eine kreisförmige Struktur besitzen, und dass die Übertragungsstruktur (36a) einen dritten und einen vierten Ubertragungsarm (86, 88) aufweist, welche sich von dem Motorelement (32) zu dem Aktuatorelement (34) erstrecken und auf gegenüberliegenden Seiten bezuglich einer Symmetrieachse (A) des Mikroaktuators (30a) angeordnet sind; wobei die Übertragungsstruktur (36a) ferner einen funften Arm (92) aufweist, welcher eine T-Form besitzt und welcher zwischen dem dritten und vierten Arm und dem Aktuatorelement (34) angeordnet ist.

7. System nach Anspruch 6, **dadurch gekennzeichnet, dass** der dritte und vierte Ubertragungsarm (86, 88) symmetrisch auf gegenüberliegenden Seiten bezüglich der Symmetrieachse (A) angeordnet sind, parallel zueinander sind und sich von benachbarten Abschnitten eines peripheren Bereiches (44) des beweglichen Elements (40) erstrecken.

8. System nach Anspruch 6 oder 7, **dadurch gekennzeichnet, dass** der funfte Arm (92) ein erstes Teil (92a), welches sich unter rechtem Winkel zwischen dem dritten und vierten Übertragungsarm (86, 88) erstreckt, und ein zweites Teil (92b), parallel zu dem dritten und vierten Ubertragungsarm (86, 88) aufweist, koaxial zur Symmetrieachse (A), und welches das erste Teil (92a) mit einer peripheren Zone des Aktuatorelements (34) verbindet.

9. System nach Anspruch 1 oder 2, **dadurch gekennzeichnet, dass** das Motorelement (32) und das Aktuatorelement (34) eine kreisformige Struktur besitzen, und dass die Ubertragungsstruktur (36b) einen sechsten Übertragungsarm (94) aufweist, welcher sich zwischen dem Motorelement (40) und dem Aktuatorelement (34) in einer geneigten Richtung bezüglich zur Symmetrieachse (A) des Mikroaktuators (32c) erstreckt.

10. System (30c) nach Anspruch 1 oder 2, **dadurch gekennzeichnet, dass** das Aktuatorelement (34) eine kreisformige Struktur besitzt und dass das Motorelement vom linearen Typ ist und dass das bewegliche Element (100) eine aufgehangte Masse (104) von im Wesentlichen langgezogener Form aufweist; und dass die Übertragungsstruktur (36c) einen siebten Übertragungsarm (114) aufweist, welcher sich zwischen der aufgehangten Masse (104) und dem Aktuatorelement (34) in einer transversalen Richtung zu der aufgehangten Masse (104) erstreckt.

11. System nach Anspruch 10, **dadurch gekennzeichnet, dass** der siebte Arm sich zwischen einer zentralen Zone der aufgehangten Masse (104) und einer peripheren Zone des Aktuatorelements (34) in einer senkrechten Richtung zu der aufgehängten Masse (104) erstreckt.

12. System (30d) nach Anspruch 1 oder 2, **dadurch gekennzeichnet, dass** das Motorelement (32) und das Aktuatorelement (34) eine kreisformige Struktur besitzen und dass die Übertragungsstruktur (36d) einen achten (140a) und einen neunten Transmissionsarm (140b) besitzen, welche sich in wechselseitig ausgerichteter Weise entlang einer Symmetrieachse (A) erstrecken und über ein Scharnierteil (141) verbunden sind, welches an einem festen Bereich (31) des Mikroaktuators (30d) uber zwei Bereiche (142a, 142b) im Wesentlichen senkrecht an den achten und neunten Arm (140a, 140b) angebracht ist.

## Revendications

1. Système de lecture/écriture pour un disque dur (7), le système comprenant un dispositif de suspension (5) positionnable sur une région dudit disque dur (7) ; un transducteur de lecture/écriture (6) couplé de manière opérationnelle audit dispositif de suspension (5) ; un premier étage d'actionnement (2) couplé audit dispositif de suspension (5) et opérationnel pour déplacer ledit dispositif de suspension (5) sur ladite région dudit disque dur (7) ; et un second étage d'actionnement (30 ; 30a ; 30b ; 30c, 30d) couplé entre ledit dispositif de suspension (5) et ledit transducteur de lecture/écriture (6) et opérationnel pour déplacer ledit transducteur de lecture/écriture (6) par rapport audit dispositif de suspension (5) ; dans lequel ledit second étage d'actionnement comprend un microactionneur (30 ; 30a ; 30b ; 30c, 30d) comprenant un élément moteur (32 ; 132) ayant un élément stationnaire (38 ; 100) couplé de manière capacitive à un élément mobile (40 ; 102) ; **caractérisé en ce que** ledit microactionneur (30 ; 30a ; 30b ; 30c, 30d) comprend en outre un élément actionneur séparé (34) espacé latéralement dudit élément moteur (32 ; 132) et couplé audit transducteur de lecture/écriture (6) ; et une structure de transmission (36 ; 36a ; 36b ; 36c, 36d) s'étendant vers l'extérieur depuis ledit élément moteur (32 ; 132) audit élément actionneur (34) pour transmettre un déplacement dudit élément mobile (40 ; 102) en un déplacement correspondant dudit élément actionneur (34).

2. Système selon la revendication 1, **caractérisé en ce que** ledit élément actionneur (34) est agencé de manière adjacente audit élément moteur (32 ; 132) et **en ce que** ladite structure de transmission (36 ; 36a ; 36b ; 36c, 36d) comprend au moins un élément de raccordement (80, 81 ; 86, 88, 92 ; 94 ; 114 ; 140a, 140b) s'étendant entre ledit élément moteur (32 ; 132) et ledit élément actionneur (34).

3. Système (30) selon la revendication 1 ou 2, **caractérisé en ce que** ledit élément moteur (32) et ledit élément actionneur (34) ont une structure circulaire et **en ce que** ladite structure de transmission (36) comprend un premier et un deuxième bras de transmission (80, 81) s'étendant entre ledit élément moteur (32) et ledit élément actionneur (34) et agencés sur des côtés opposés par rapport à un axe de symétrie (A) dudit microactionneur (30).

4. Système selon la revendication 3, **caractérisé en ce que** lesdits premier et deuxième bras de transmission (80, 81) sont agencés symétriquement sur des côtés opposés par rapport audit axe (A).

5. Système selon la revendication 3 ou 4, **caractérisé en ce que** lesdits premier et deuxième bras de transmission (80, 81) raccordent des parties approximativement diamétralement opposées d'une région périphérique (44) dudit élément mobile (40) à des régions sensiblement diamétralement opposées (84) dudit élément actionneur (34).

6. Système (30a) selon la revendication 1 ou 2, **caractérisé en ce que** ledit élément moteur (32) et ledit élément actionneur (34) ont une structure circulaire et **en ce que** ladite structure de transmission (36a) comprend un troisième et un quatrième bras de transmission (86, 88) s'étendant vers ledit élément actionneur (34) depuis ledit élément moteur (32) et agencés sur des côtés opposés par rapport à un axe de symétrie (A) dudit microactionneur (30a) ; ladite structure de transmission (36a) comprenant en outre un cinquième bras (92) ayant une forme de T et interposé entre lesdits troisième et quatrième bras et ledit élément actionneur (34).

7. Système selon la revendication 6, **caractérisé en ce que** lesdits troisième et quatrième bras de transmission (86, 88) sont agencés symétriquement sur des côtés opposés par rapport audit axe de symétrie (A), sont parallèles l'un à l'autre et s'étendent depuis des sections adjacentes d'une région périphérique (44) dudit élément mobile (40).

8. Système selon la revendication 6 ou 7, **caractérisé en ce que** ledit cinquième bras (92) comprend une première partie (92a) s'étendant à angle droit entre lesdits troisième et quatrième bras de transmission (86, 88) et une seconde partie (92b) parallèle auxdits troisième et quatrième bras de transmission (86, 88), coaxiale avec ledit axe de symétrie (A) et raccordant ladite première partie (92a) à une zone périphérique dudit élément actionneur (34).

9. Système (30b) selon la revendication 1 ou 2, **caractérisé en ce que** ledit élément moteur (32) et ledit élément actionneur (34) ont une structure circulaire et **en ce que** ladite structure de transmission (36b) comprend un sixième bras de transmission (94) s'étendant entre ledit élément moteur (40) et ledit élément actionneur (34) dans une direction inclinée par rapport à un axe de symétrie (A) dudit microactionneur (32c).

10. Système (30c) selon la revendication 1 ou 2, **caractérisé en ce que** ledit élément actionneur (34) a une structure circulaire et ledit élément moteur est de type linéaire et ledit élément mobile (100) comprend une masse suspendue (104) de forme sensiblement allongée ; et **en ce que** ladite structure de transmission (36c) comprend un septième bras de transmission (114) s'étendant entre ladite masse suspendue (104) et ledit élément actionneur (34) dans une direction transversale à ladite masse suspendue (104).

11. Système selon la revendication 10, **caractérisé en ce que** ledit septième bras s'étend entre une zone centrale de ladite masse suspendue (104) et une zone périphérique dudit élément actionneur (34) dans une direction perpendiculaire à ladite masse suspendue (104).

12. Système (30d) selon la revendication 1 ou 2, **caractérisé en ce que** ledit élément moteur (32) et ledit élément actionneur (34) ont une structure circulaire et **en ce que** ladite structure de transmission (36d) comprend un huitième (140a) et un neuvième bras de transmission (140b) s'étendant de manière mutuellement alignée le long d'un axe de symétrie (A) et joints par une partie articulée (141) raccordée à une région fixe (31) dudit microactionneur (30d) par l'intermédiaire de deux sections (142a, 142b) sensiblement perpendiculaires auxdits huitième et neuvième bras (140a, 140b).
